# EUROPEAN PATENT APPLICATION

(11) **EP 0 594 468 A1**
(43) Date of publication of application: **27.04.1994**
(21) Application number: 93308496.4
(22) Date of filing: 25.10.1993
(51) Int. Cl.: F16B 2/04, H02G 9/04, E01C 11/22

(54) **Fixing device**

(30) Priority: 23.10.1992 GB 9222246
(71) Applicant: H. GORDON & CO. LIMITED, Frodsham, Warrington (GB); BISHOP AUKLAND PRECAST CONCRETE LIMITED, Bishop Aukland, County Durham DL14 9AJ (GB)
(72) Inventor: Dison, John, Kingslay, Warrington WA6 6UD (GB); Dison, Julian, Liverpool L8 3SA (GB)
(74) Representative: Cardwell, Stuart Martin

(57) **Abstract**

The present invention proposes various embodiments of fixing device for securing, for example, a lid to a trough. The device comprises laterally extending opposed interconnected gripping means (3,5 ; 3',5' ; 3"/5" ; 40,41), a bridge member (7 ; 35 ; 42 ; 75 ; 7a) interspaced between the opposed gripping means and engageable by a securing means 11 to hold the fixing device in contact with the lid by way of a support structure (15; 60,61 ; 35 ; 60',61'; 73 ; 81,82). Cooperating engagement of the securing means with the bridge member serves to generate outwardly directed functional gripping force at said opposed gripping means. In one embodiment the opposed gripping means and bridge member are formed integrally as an arcuate strip of metal and the support structure 15 comprises a U-shaped member with limbs (17, 19) engaging the strip at spaced positions. One of the limbs is secured relative to the strip and the other is movable.

## Description

The present invention relates to a fixing device for securing one member to another member and has particular application to the securing of a lid to a concrete trough but is not limited to such.

Precast concrete troughs complete with lids are commonly used butted up to each other to from continuous channels for the safe housing of optic fibres, power and communication cables and other services such as transmission of water and sewerage. These may be employed alongside railways, motorways or in any application where it is desirable for services to be protected. It is usually necessary that access should be granted to the services within for maintenance or repair or the insertion of extra cables etc. and for this reason such troughs are normally freestanding or partially set into the ground.

Given these circumstances, in many situations- commonly where roads or railways pass through urban areas - unauthorised access can be gained simply by lifting the lids off the troughs. This can lead to the damage of their contents, personal injury or the use of the lids for purposes of vandalism. It is thus extremely beneficial to be able to fix the lids securely and reliably in place and thus prevent any opportunistic removal. At present the usual method of securing the lids to the troughs is by use of an epoxy adhesive.

It is an aim of the present invention to provide an alternative solution which is more convenient, less time consuming and facilitates repeated access to the troughs.

Accordingly, the present invention provides a fixing device for securing one member to another member, comprising laterally extending diametrically opposed interconnected gripping means, a bridge member interposed between the diametrically opposed gripping means and engageable by a securing means to hold the fixing device in contactwith said one member by way of a support structure and wherein cooperating engagement of the securing means with the bridge member serves to generate an outwardly directed frictional gripping force at said diametrically opposed gripping means.

The diametrically opposed gripping means are urged into contact with opposed internal walls of said another member. In the preferred application said one member comprises a lid and said another member comprises a concrete trough.

More particularly the diametrically opposed gripping means comprise a pair of lateral oppositely extending wings preferably formed from strip or sheet material (for example metal - say steel or stainless steel - or plastics) and which may be generally planar or arcuate.

Alternatively the gripping means may simply comprise edges to the opposite ends of the bridge member. According to a preferred embodiment the diametrically opposed gripping means, say as wings, are an extension of the bridge member (which serves to interconnect the wings) and in a preferred embodiment are integral with one another and, for example, comprise a single strip of metal. The strip may be straight or more preferably arcuate. In a a yet further alternative the bridge member may comprise a hinge-like component with the gripping means provided by extensions to opposite ends thereof. In a yet further embodiment the diametrically opposed gripping means comprise wings extending from a channel section (serving to interconnect the wings) and the bridge member comprises a separate component which is received in the channel section. The cross-section of the channel and/or the separate component is wedge shaped so that engagement of the securing means with the separate bridge member serves to generate the outwardly directed frictional gripping force in the gripping means. Conveniently the gripping means and bridge member are collectively referred to as a thrust means in view of the fact that the gripping force is transmitted through these parts.

The securing means conveniently comprises a bolt-like component having a head for engagement with said one member, conveniently a countersunk head with an alien socket or alternative, and having a threaded shank which engages screw threadingly directly or indirectly with the bridge member. Athread- ed nut or sleeve may be provided for cooperating engagement with the threaded shank, with the sleeve being located non-rotatably with respect to the bridge member.

The support structure is positioned so that when the support structure engages said one member the gripping means are set off from said one member by a pre-determined distance. Preferably the support structure extends from one face of the thrust means. The support structure may simply comprise a pair of legs bent out of the material forming part of the thrust means, be it the bridge member or the diametrically opposed wings, or may comprise a separate structure, say of U-shaped configuration. The free ends of the U-shaped limbs may have returns to provide cooperating engagement with the thrust means between the opposed gripping edges of the gripping means. It is deemed advantageous for only one of the limbs to be secured to the thrust means leaving the other limb to provide cooperating engagement with the thrust means but allowing relative lateral movement of thrust means over the end of the limb. Preferably the limbs of the support structure are angled so as to converge towards the lid. The spacing of the limbs act as spaced line supports across the width of the thrust means and their intersection with the thrust means can be regarded as defining the junction between the bridge member and the gripping wings. An alternative construction of support structure comprises, for example a block of a semi-rigid material, for example expanded polystyrene, which is force-sustaining but compressible to a limited degree. In such an arrangement the support is spread over the area of the block.

The present invention will now be described further, by way of example only, with reference tothe accompanying drawings, in which:-
Figure 1 is a perspective view of a first embodiment of a fixing device according to the invention,
Figure 2 is a side view of the embodiment of Figure 1 shown securing the concrete lid to the concrete trough, and
Figures 3 to 8 are perspective views of alternative embodiments of fixing device according to the invention.

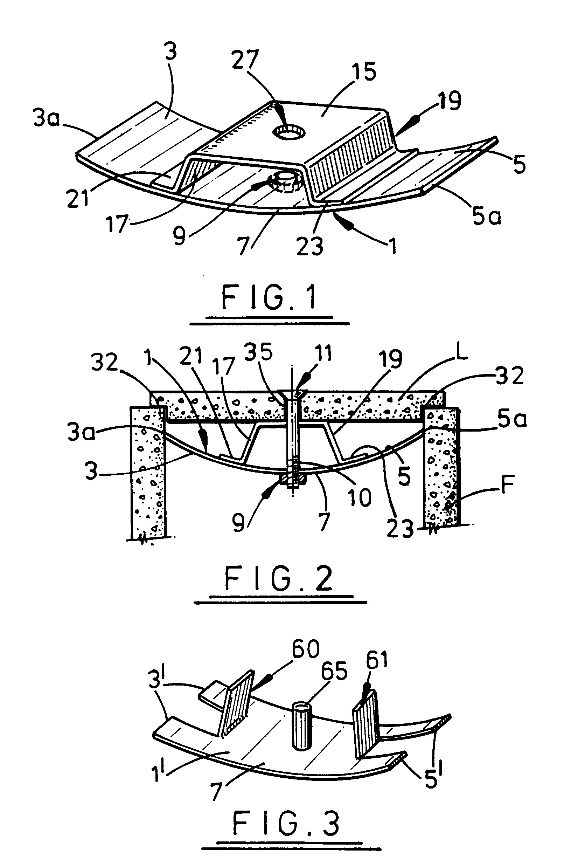

Referring firstly to Figures 1 and 2 there is illustrated a fixing device for securing a lid L to a trough T, and comprises a bow-shaped metal strip 1 of requisite strength and springiness the end portions of which constitute laterally extending diametrically opposed wings 3, 5 interposed by a bridge member 7. In this embodiment the bridge member serves to interconnect the diametrically opposed wings 3, 5, the parts being integral with one another. The bridge member carries a threaded insert 9 to receive threadingly a threaded shank 10 of a securing bolt 11. The bolt is shown as a countersunk headed bolt, but other configurations may be employed. Secured to one face of the strip 1 is a support structure comprising an inverted U-shaped metal section having a base 15 and inclined side limbs 17, 19. In the illustrated embodiment the free ends of the limbs have returns at 21, 23 and one of the returns 21 is secured to the strip 1. Where the components are metal this securement is conveniently by rivetting or welding. The other return 23 engages the strip 1 to provide support. The base 15 has a hole 27 positioned generally centrally and sufficiently large to allow passage therethrough, with clearance, of the shank 10 of bolt 11.

The upstanding side walls of the trough T are illustrated in Figure 2 as having inside surfaces which are generally planar and slightly divergent from the base. The lid L fits on top of the upstanding side walls to close the open top and has edge rebates 32 for lateral location. Each lid may have one or more holes 35 through which the threaded end of bolt 11 is inserted and offered up to the thrust means with the shank passing through the hole 27 in the base 15 of the U-section support structure and threadingly engaged with the insert 9. The device is loosely tightened so that the U-section contacts the underside of the lid and is held transversely across the lid. When the lid is placed on the trough with the device in position the length of the bow is such that its ends first contact the top inside corners or surfaces of the trough, the resistance of which causes the bow to deflect further when the lid is pressed down into position, thereby generating gripping engagement with the upper inside wall. Thus the radius of curvature will effectively decrease. In fact it is possible to use a strip which is initially flat and of a length greater than the internal width of the trough such that when it is introduced into the trough it is effectively forced into a bow shape. In most cases the tolerances in the length of the bow and the width between the internal walls of the trough will result in contact of the ends of the bow and the friction generated will be sufficient to prevent the lid from being removed. Should however more friction force be required to prevent the lid from being removed, all that is necessary is for the bolt 11 to be tightened. This causes the curvature of the bow to be flattened between the ends of the U-section limbs, ie. over the bridge portion 7 thus increasing the overall length of the bridge portion and generating an outwardly directed force which increases the frictional grip at the trough walls. Because only one side 21 of the U-section is connected to the bow the flattening effect is enhanced rather than resisted by the presence of the U-shaped support structure. Similarly, the connection of only one side of the U-section to the bow facilitates insertion of the device into the trough by allowing slippage at the free end of the U-section thus allowing bowing or further bowing of the metal strip to occur along its whole length and not just outside the legs of the U.

As well as flattening the centre section of the bow, and because the returns at the ends of the U-section act as pivot points, a further effect of tightening the bolt is a tendency to force the gripping edges of the ends of the bow further down into the trough. As most troughs have a tapering thickness of the side walls and hence reducing internal width lower down the trough, this enhances the friction effect. Because of the lateral and downward movement which can be achieved at the ends of the bow by these effects, variations in trough widths can be accommodated, both by tightening the bolt if the trough is too wide and by the inherent deflectability of the bow should the trough be too narrow.

To remove the lid from the trough it will normally be necessary to completely remove the bolt 11, thereby allowing the lid to be lifted off and leaving the device still wedged in the trough where it can be re-used in situ or alternative knocked out and relocated.

In order to maximise the volume of free space within the trough to prevent possible damage to cables etc., it is desirable to minimise the projection of the threaded insert and the threaded end of the bolt 11 below the bow. This can be achieved by utilising fixings such as rivet bushes which project upwards from the bow or strip. It may also be desirable to use plastic inserts to minimise costs and prevent corrosion. It would be advantageous to use inserts which utilise non-circular fixing holes which ensure the fixing will not turn when the bolt is tightened.

Over tightening the bolt can result in deformation of the bow and to prevent this a tube of the correct length can be inserted over the bolt and between the base of the U-section and the bow. Alternatively, a blind insert can be utilised with the correct length bolt, or a bolt can be used which has a limited length of thread.

Given the provision of suitable holes in the lid, the device may be incorporated at any point along the length of the trough and at any frequency depending on the level of security required. The lids may be staggered over troughs so allowing keying together of the adjacent troughs. Pre-assembly of the device onto the lid enables it to be fitted to the trough by simply lowering in place and pushing down with no special tools required. The device is reusable giving considerable cost saving compared with the current usual method of fixing which involves an expensive and time-consuming gluing operation. Different bolt options permit a choice of security level. Custom-made bolts with heads to suit a specification pass key could be employed. Although preformed holes in the trough lids are desirable it is very easy to drill holes in lids of existing troughs to provide security.

Reference is now made to Figures 3 to 6 which illustrate alternative embodiments of the invention. In Figure 3 the U-shaped support structure of Figure 1 is replaced by two legs 60, 61 pressed up from the bow 1' to define two laterally spaced support legs, and the laterally extending diametrically opposed gripping wings 3', 5', in this case two to each side, interconnected by the interposed bridge member 7. A threaded sleeve is shown at 65 inserted from the convex side of the bow and of a length to limit the flattening effect of the bow. The device functions in the same manner as that described with reference to Figures 1 and 2.

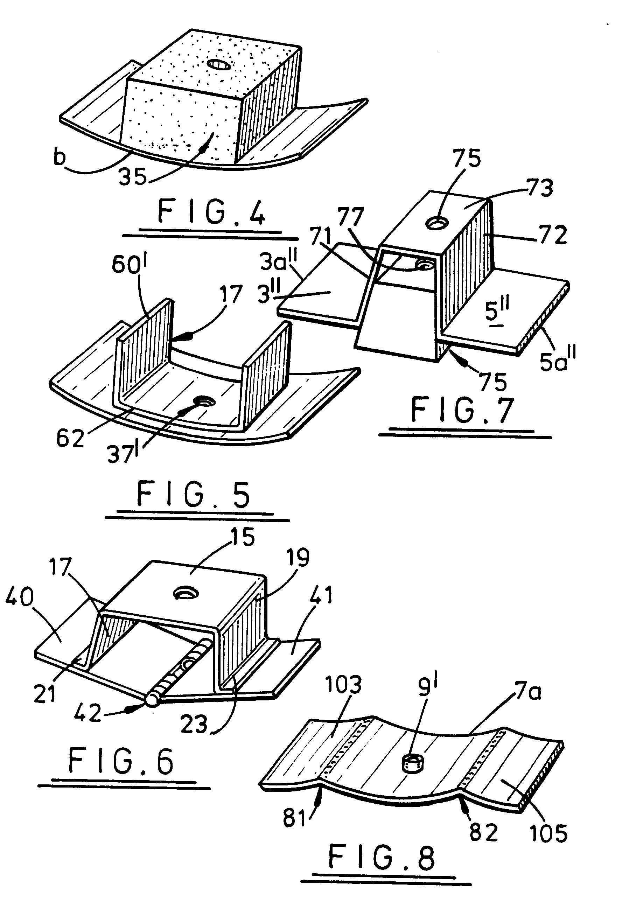

In Figure 4 the above described support structure is replaced by a block 35 of semi-rigid material, for example expanded polystyrene which is capable of sustaining the retaining force of the securing bolt by way of a suitable threaded insert whilst accommodating deflection of the bowed strip. The threaded insert conveniently provides cooperating engagement with the thrust means. Alternatively, the block may be glued to the thrust means. The resulting force will be distributed over the base b of the block. The device will function in the same manner as that described with reference to Figures 1 and 2. The thrust means comprises a bow shaped member which is conveniently formed from a strip of metal.

Figure 5 shows an arrangement in which the support structure comprises a U-shaped bracket 37 in the form of a plastics moulding combining a threaded insert 37' and laterally spaced legs 60' 61' connected by a bridging limb 62. The moulding is keyed to the bowed strip so that the flattening forces can be transmitted to it. The ends of the Iimbs 60', 61' engage the lid. Again the thrust means comprises an arcuate strip of metal.

In the embodiment of Figure 6 the bowed strip is replaced by two plate members 40, 41 connected by a hinge 42 providing the laterally spaced gripping means and the bridge member. The embodiment uses the U-shaped support structure of Figures 1 and 2 comprising base 15, limbs 17,19 and returns 21, 23 although other arrangements could be employed. The securing means cooperates with either a hinge pin or simply with the underside of the hinge. Insertion of the device into the trough will give rise to deflection of the hinge with the respective plate members moving towards one another. Tightening of the securing means will serve to flatten out the parts generating the gripping engagement with the internal walls of the trough.

Figure 7 describes a yet further embodiment in which a strip of metal is bent to form two laterally extending diametrically opposed gripping wings 3", 5" having respective gripping edges 3a", 5a", but interconnected by a generally U-shaped portion having side limbs 71, 72 and a base 73. The limbs are inclined with respect to one another. The base has a hole 75 to receive passage therethrough of the shank of the securing means, eg. bolt 11, and a bridge member is formed by a wedge member 75, conveniently formed of plastics and provided with a threaded hole 77 to receive the threaded end of the securing means. It will be understood that as the securing means is tightened up the wedge body 75 is drawn into the channel thereby forcing the wings outwardly into gripping engagement with the inner walls of the trough.

Finally Figure 8 describes a yet further embodiment formed from a strip of metal and bent to form a central bridge member 7a of arcuate configuration leading to support ridges 81, 82 which will, in use, engage the lid and from which extend the lateral side wings 103, 105. The bridge member contains the threaded insert 91 and it will be apparent that when the bolt is tightened the bridge member is effectively flattened forcing the ends of the bow outward into gripping engagement with the trough walls.

## Claims

1. A fixing device for securing one member to another member, comprising laterally extending opposed interconnected gripping means, a bridge member interposed between the opposed gripping means and engageable by a securing means to hold the fixing device in contact with said one member by way of a support structure and wherein cooperating engagement of the securing means with the bridge member serves to generate an outwardly directed frictional gripping force at said opposed gripping means.

2. Afixing device as claimed in claim 1 in which the opposed gripping means comprise a pair of lateral oppositely extending wings.

3. A fixing device as claimed in claim 1 or 2 in which the opposed gripping means are formed from strip or sheet material.

4. A fixing device as claimed in any one of claims 1, 2 or 3 in which the opposed gripping means, say as wings, are an extension of the bridge member which serves to interconnect the wings.

5. A fixing device as claimed in claim 1 in which the bridge member comprises a hinge-like component with the gripping means provided by extensions to opposite ends thereof.

6. A fixing device as claimed in claim 1 in which the opposed gripping means comprise wings extending from a channel section which serves to interconnect the wings and the bridge member comprises a separate component which is received in the channel section.

7. A fixing device as claimed in any one of the preceding claims in which the support structure extends from one face of the gripping means and bridge member which are collectively referred to as thrust means.

8. A fixing device as claimed in claim 7 in which the support structure comprises a pair of legs bent out of the material forming part of the thrust means, be it the bridge member or the diametrically opposed wings.

9. A fixing device as claimed in claim 7 in which the support structure comprises a separate structure of U-shaped configuration.

10. A fixing device as claimed in claim 9 in which the free ends of the U-shaped limbs have returns to provide cooperating engagement with the thrust means between the opposed gripping edges of the gripping means and in which only one of the limbs is secured to the thrust means leaving the other limb to provide cooperating engagement with the thrust means but allowing relative lateral movement of thrust means over the end of the limb.

11. Afixing device as claimed in claims 2 or 3 in which the support structure comprises a block of a semi-rigid material which is force-sustaining but compressible to a limited degree.
